Europäisches Patentamt

(19) European Patent Office

Office européen des brevets

(11) Publication number: **0 374 077**

**A2**

(12) **EUROPEAN PATENT APPLICATION**

(21) Application number: **89500106.3**

(22) Date of filing: **16.10.89**

(51) Int. Cl.5: **H04L 17/00**

(30) Priority: **16.12.88 ES 8803825**

(43) Date of publication of application:
**20.06.90 Bulletin 90/25**

(84) Designated Contracting States:
**AT BE CH DE FR GB GR IT LI LU NL SE**

(71) Applicant: **AMPER S.A.**
**Torrelaguna, 75**
**E-28027 Madrid(ES)**

(72) Inventor: **Blanco Martin, Emilio**
**Torrelaguna, 75**
**ES-28027 Madrid(ES)**

(74) Representative: **Carpintero Lopez, Francisco**
**HERRERO & ASOCIADOS, S.L. Alcalá, 21**
**E-28014 Madrid(ES)**

(54) **Transmission system for telegraphic communications.**

(57) The transmission system for telegraphic communications through the commutated telephone network is comprised by two phonotelex devices, one of which is connected to a teletype and the other to a telex exchange, each of them being provided with a cable for connection to the telephone and a connector for connection to a related telephone and a teletype or telex line, in addition to a plug-in transformer for connection to the mains.

Each phonotelex is in turn constituted by the functional association of two interfaces, one for the telex line and the other for the telephone line, a control module and a feed module. Both phonotelex devices have a common part which is comprised by current detecting circuits and a line switch, and a differentiating part comprised by a DC-DC convertor and a polarity selector in the phonotelex connected to the teletype, and a resistance related to a contact in that connected to the telex exchange.

FIG.-2

## TRANSMISSION SYSTEM FOR TELEGRAPHIC COMMUNICATIONS

OBJECT OF THE INVENTION

The present invention, as expressed in the title of the specification, is related to a transmission system for telegraphic communications, with the particularity that said telegraphic communications are effected through a commutated telephone network.

BACKGROUND OF THE INVENTION

As is known, a teletype is an electromechanical device used for the transmission of messages and news flashes. The transmission device of the teletype sends messages as electrical pulses, in accordance with a code defined by a perforated tape. The receiving device detects such pulses and translates and prints them automatically onto paper through a magnetic system. A machine similar to a typewriter is used to transmit the message, which machine sends such pulses to customers by perforating the tape.

Continued improvements have considerably simplified the use of the teletype, thus following it to become more widespread, and likewise facilitating the establishment of a public service (telex), with communication networks and automatic exchanges.

On some occasions the range of the telex network is insufficient. Given that the telephone line is very widespread, the system proposed by the invention allows the telex network range to be extended whenever necessary.

DESCRIPTION OF THE INVENTION

The transmission system for telegraphic communications via the commutated telephone line is constituted by two devices called phonotelex. One of such devices is connected to the teletype, its mission being to simulate the telegraph exchange and transmit to the telephone line whatever is received by the teletype, and vice versa. The other device comprising the system is connected to the telex exchange, its mission being to simulate the teletype and transmit to the telephone line whatever is received by the telex exchange, and vice versa.

The devices are connected to the mains by means of a plug-in transformer; to the telephone line by means of a cable provided in the device; to a telephone related through a connector in the device and to the teletype or telex line by means of a connector which is likewise provided in the device.

Referring to the system itself, same is comprised by four functional blocks, two interfaces, one for the telex line and the other for the telephone line, a control module and a feed module.

The two systems are differentiated by the interface for the telex line. Whereas the one connected to the teletype is provided with a DC-DC converter which supplies the feed voltage to the telegraph line and a polarity selector, since the telex exchange indicates the on- and off-line situations by means of polarity changes, the one connected to the telex exchange which works as a teletype includes, instead of the previous elements, a resistance for indicating on- and off-line situations.

DESCRIPTION OF THE DRAWINGS

In order to complete the description being made, and to assist a better understanding of the characteristics of the invention, a set of drawings is attached to the present specification, as an integral part thereof, where the following has been shown in an illustrative and non-limiting manner:

Figure 1.- Shows a block diagram of the transmission system for telegraphic communications through the commutated telephone network.

Figure 2.- Shows the phonotelex device and the different connections within the system.

Figure 3.- Shows a block diagram of the phonotelex.

PREFERRED EMBODIMENT OF THE INVENTION

In the light of the figures, it can be observed that the transmission system for telegraphic communications through the commutated telephone network being described is comprised by a phonotelex 1 simulating a telegraph exchange which is connected to a teletype 2 through line 3 which is a cable connection between the teletype and the phonotelex, and transmits to the telephone line 4 whatever is received by the teletype, and vice versa. A further phonotelex 5 is connected to the telex exchange 6, its function being to simulate a teletype and transmit to the telephone line 4 whatever is received by the telex exchange, and vice versa.

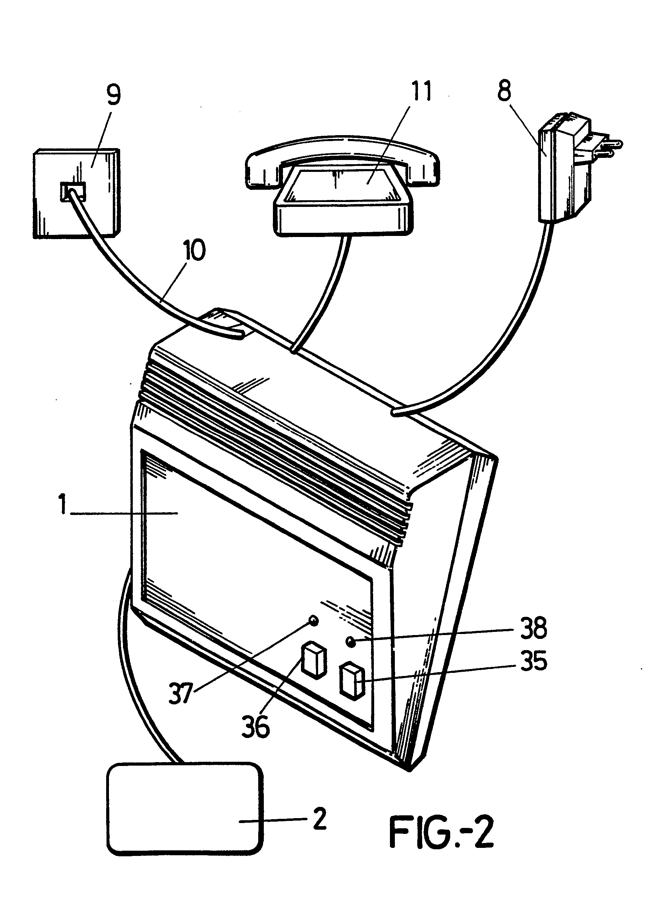

As shown in figure 2, both phonotelex devices 1 and 5 are connected to the mains 7 by means of a plug-in AC-AC transformer 8, to the telephone line 9 by means of a cable 10 provided in the device, to a related telephone 11 by means of a connector situated in the device and to the teletype 2 or telex exchange 6 likewise by means of a connector provided in the device itself.

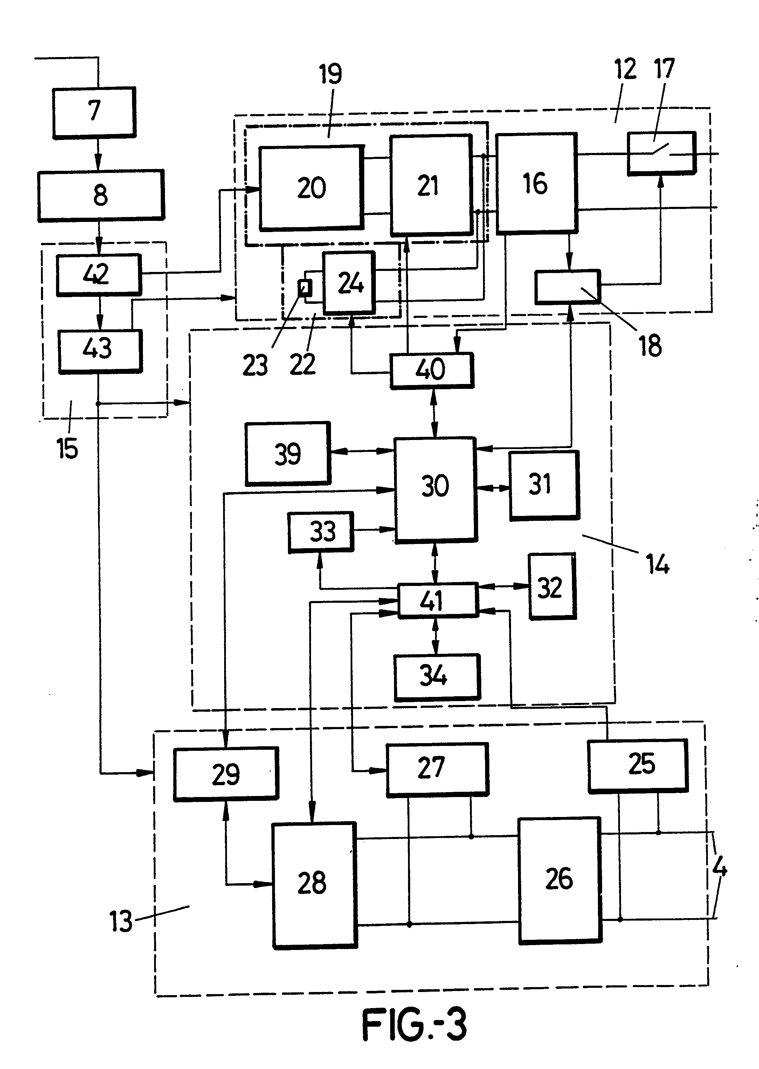

The phonotelex consists of four functional blocks, as shown in figure 3, an interface with telex line 12, an interface with telephone line 13, a control module 14 and a feed module 15.

The interface with the telex line 12 is what distinguishes the two phonotelex devices 1 and 5. Both are provided with current detecting circuits 16 to differentiate the different states of the line, a line switch 7 which makes and breaks the line as a form of transmission, and a series data interface 18. Phonotelex 1 is provided with a section 19 comprised by a DC-DC convertor 20 which provides the feed voltage to telegraph line 3 and a polarity selector 21 to indicate situations of on- and off-line by means of polarity changes; whereas the phonotelex 5 includes a section 22 comprising a resistance 23 related to a terminal 24 used by the device to indicate the said situations of on- and off-line.

The interface with the telephone line 13 consists of a call detector 25 which indicates the presence of a call (25 Hz) in telephone line 4, to which is related a dialling unit, which is effected by pulses depending on the state of a bridge, by opening or closing the line through a relay or by multifrequency, by means of a generator which is further used to introduce a sound tone identifying the phonotelex as a modem when placing a call. In addition to the call detector 25, the interface with telephone line 13 is constituted by a hybrid 26 which separates reception and transmission of the signal along the line, detectors 27 of 2100 Hz and 400 Hz which identify the presence of the reply tone of the modem called and of the telephone exchange respectively, an FSK modem 28 programed with a V21 protocol and a transmission speed of 300 bauds through telephone line 4 and a series data interface (UART) 29 with modem 28.

Both telegraph line 3 and telephone line 4 are controlled by a control system 14 based on an 8-bit microprocessor 30. The program is contained in a 32 Kbyte external EPROM memory to which is related an 8 Kbyte RAM CMOS data memory, this relationship being marked 31.

The CPU of microprocessor 30 is connected to the interfaces of telegraph line 12 and telephone line 13 by means of two UART 18 and 29, which are external to microprocessor 30.

The phonotelex must know the telephone number of the related phonotelex, and that same be known irrespectively of whether supply is maintained or not; a series EEPROM memory 32 is thus used. Given the possibility that the microprocessor 30 might exit the program, the Watch-dog circuit 33 produces periodical resets, unless same are cancelled by (periodical) signals from the microprocessor 30.

The keyboard 34 consists of two keys. One of them, "M/A" 35, of two-phase operation, includes a pilot for indicating the state of the phonotelex; when on, it indicates automatic mode, connecting to the line after the second ring; when off it indicates manual mode.

The second key, "P/D" 36, (data passage) allows connection to data once the user has detected the identification tone of a modem. The optical indicators consist of the previously mentioned pilot and two others. One of them, "RED" 37, indicates that the phonotelex is being fed, and another, "CONEX" 38, when flashing indicates that there is an outgoing call, and when permanently on that it is in data connection.

A timer 39 and two input/output units 40 and 41 are related to microprocessor 30.

As regards the feed module 15, same supplies the necessary voltage for feeding the system. It is comprised by a rectifier 42 and a regulator 43 related to which there is provided a DC-DC convertor. Supply from the mains 7 to the phonotelex is effected at 110 V ef. by means of the plug-in transformer 8 external to the system.

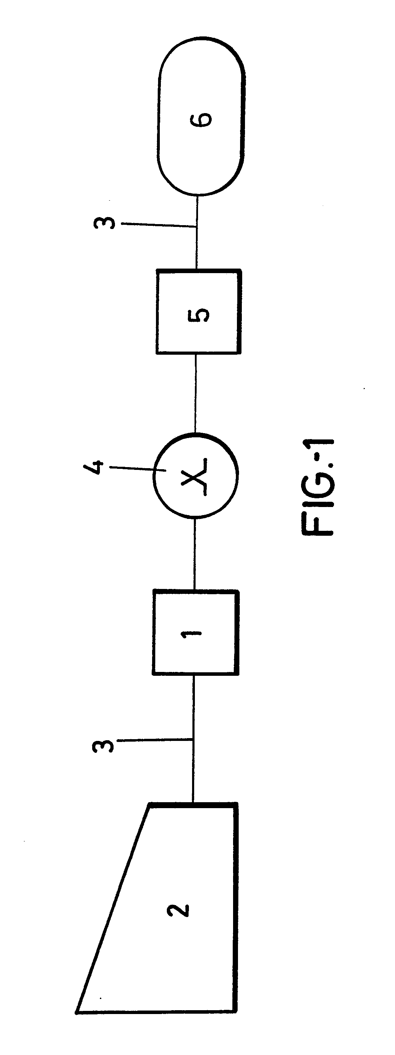

Turning back to the diagram shown in figure 1, a telex call may originate from teletype 2 or from telex exchange 6. When there is a call request from teletype 2, phonotelex 1 detects same and starts a telephone call towards phonotelex 5. When the two are connected, via modem, phonotelex 1 sends to phonotelex 5 the signal to connect to the telex line. Phonotelex 5 requests connection to the telex line, and, when authorized thereby, sends a message to 1 indicating same, whereby phonotelex 1 connects to the teletype. As from this moment, both phonotelex machines are open to the telex transmission, each of them sending the message received from the terminal connected thereto to the other phonotelex.

For a call request from the exchange, phonotelex 5 detects same and simulates connection, sending a waiting signal. It then starts a telephone call towards 1 and when both phonotelex devices are connected, via modem, 5 sends to 1 the order to connect to the teletype. It connects to the teletype and requests an indicative. As from this moment, both phonotelex devices are open to the telex transmission at both terminals.

At this stage, whatever arrives through the telegraph line in a current loop in 5-bit alphabet, without parity and at a speed of 50 bauds is retransmitted to the telephone line with parity bit, with LRC load parity, in 8-bit alphabet and at a speed of 300 bauds. As opposed to this, whatever arrives via the telephone line is analyzed to detect possible errors, confirmed whenever necessary, unloaded, demodulated and transmitted to the telegraph line.

The transparent stage is interrupted by a telex break at one end of communication, this being notified to the other end by means of a new control message, which produces a simulation of hanging up at the other end. When a reply to such break is received, as a control message, same is related to the telegraph line, both telephone and telegraph communication then being resumed.

At the start of phonotelex communication, which is always started at either end by the telegraph part, once the phonotelex has detected the request for a call, it disconnects the telephone related to the telephone line and connects itself, telephone dialling of the related phonotelex number stored in an EEPROM memory then starting, (which, depending on the state of bridge, may be by multifrequency or by pulses). The modems at both ends are then connected.

Programming of the telephone number to be dialled and of the indicative is effected by forming a programming bridge and resetting phonotelex 1, whereby an interactive dialogue is set up with the teletype connected, such that the phonotelex receives the data to be programmed via telex. When this phase is over, the bridge formed previously is broken and the phonotelex is again reset.

For an incoming call (telephone part) the phonotelex is connected after two rings. This is the modem connection stage of the phonotelex devices. Once the modems are connected, the control message notifying request for connection is awaited, such request being simulated at that moment and confirmation thereof being awaited. When same is received, it is transmitted to the other end as a control message, and the transparent stage begins.

It is not considered necessary to extend the present description any further for a person skilled in the art to which it pertains to understand the scope of the invention and the advantages derived therefrom.

The materials, shape, size and arrangement of the elements may vary, provided such modifications do not imply a variation of the essentiality of the invention.

The terms used in the present specification should be understood to have a wide and non-limiting meaning.

## Claims

1.- Transmission system for telegraphic communications which, being designed for the transmission of telegraphic communications through the commutated telephone network, is essentially characterised in that it is comprised by two phonotelex devices, one connected to a teletype and the other to a telex exchange, each constituted by the functional association of an interface with a telex line, an interface with a telephone line, a control module and a feed module, there being provided a cable for connection to the telephone line, two connectors for connection to a related telephone and to a teletype or telex line, and a plug-in transformer for connection to the mains.

2.- Transmission system for telegraphic communications, in accordance with claim 1, characterised in that the interface with the telex line has a part which is common to both phonotelex devices and which is constituted by current detecting circuits and a line switch, related to which there is a DC-DC convertor and a polarity selector, in the phonotelex connected to the teletype, and a resistance in that connected to the telex exchange.

3.- Transmission system for telegraphic communications, in accordance with claim 1, characterised in that the interface with the telephone line is constituted by a call detector, a dialling unit, a hybrid, a multifrequency generator, detectors of 2100 and 400 Hz, a modem, and a series data interface.

4.- Transmission system for telegraphic communications, in accordance with the preceding claims, characterised in that the control unit is comprised by a microprocessor with RAM CMOS, EPROM and EEPROM memory units, a timer, a watch-dog circuit, input/output units and keyboard related to the said microprocessor.

5.- Transmission system for telegraphic communications, in accordance with the preceding claims, characterised in that the feed module is constituted by a rectifier, a regulator, and a DC-DC convertor, supplying the necessary voltage for feeding the system from the mains.

FIG.-1

EP 0 374 077 A2

FIG.-2

EP 0 374 077 A2

FIG.-3